# EUROPEAN PATENT APPLICATION

(11) **EP 2 341 665 A1**
(43) Date of publication of application: **06.07.2011**
(21) Application number: 09817220.8
(22) Date of filing: 09.09.2009
(51) Int. Cl.: H04L 12/26

(54) **USER NETWORK- WIDE TRACING METHOD, SYSTEM AND APPARATUS IN NETWORK**

(30) Priority: 26.09.2008 CN 200810166828
(71) Applicant: Huawei Technologies Co., Ltd., Shenzhen, Guangdong 518129 (CN)
(72) Inventor: WENG, Zaixin, Shenzhen Guangdong 518129 (CN); ZHAO, Xingjun, Shenzhen Guangdong 518129 (CN)
(74) Representative: Pfenning, Meinig & Partner GbR
(86) International application number: PCT/CN2009/073836
(87) International publication number: WO 2010/037306

(57) **Abstract**

A method, system, and apparatus for tracing a user in a network are provided. The method includes: activating a task for tracing a user in a network according to a tracing task message sent by an Element Management System (EMS); and sending the tracing task to an Evolved NodeB (eNodeB) through an S1 link. Therefore, the activated task for tracing user in a network can be sent through the S1 link, so as to realize tracing the user in the network in the network.

## Description

### FILED OF THE INVENTION

The present invention relates to the field of communication technology, and in particular, to a method, system, and apparatus for tracing a User Equipment (UE) in a network.

### BACKGROUND OF THE INVENTION

The 3rd Generation Partnership Project Long Term Evolution (3GPP LTE), also known as the Evolved_Universal Terrestrial Radio Access (E_UTRAN), is referred to as the Evolved 3G mobile communications (E3G) together with the 3GPP2 Ultra Mobile Broadband (UMB). As an evolved technology of the 3rd Generation (3G) digital communication, the 3GPP LTE has characteristics such as expandable bandwidth, a low delay, a high speed, support of interoperation of existing networks, a large coverage, support of high-speed mobility, and a low network construction cost. In an LTE network, a Radio Network Controller (RNC) network element of the 3G network is replaced by an evolved base station(evolved NodeB, eNodeB) which comprises the function of the RNC and a NodeB of the 3G network. Corresponding to the evolution technology of an Radio Access Network (RAN) in the LTE network, the evolution technology of a Core Network (CN) thereof is referred to as System Architecture Evolved (SAE), in which the most important network element is a Mobility Management Entity (MME).

With rapid development of mobile communication, daily maintenance of a network, location of a network fault, and rectification of the network fault become increasingly difficult. As signaling is the basis of establishing communication, a fault in a communication network can be located rapidly by analyzing the signaling. As the market competition becomes more fierce, network operators are required to change from equipment-oriented into user-oriented. Therefore, it is necessary to trace signaling of a UE besides interfaces of equipment.

Tracing a UE in a network is to trace all of signalings of the UE with a designated International Mobile Station Equipment Identity (IMSI)/International Mobile Station Identification Code (IMEI), in the RAN or the CN.

The inventors find that, in the prior art, no solution is provided to implement the function of tracing a UE with a designated IMSI/IMEI.

### SUMMARY OF THE INVENTION

The present invention relates to a method, system, and apparatus for tracing a UE in a network, so as to realize tracing the UE in the network.

Accordingly, an embodiment of the present invention provides a method for tracing a UE in a network, where the method includes:
activating a task for tracing a UE in a network according to a task message sent by an Element Management System (EMS); and
sending the task to an eNodeB through an S1 link.

An embodiment of the present invention further provides a system for tracing a UE in a network, where the system includes:
an MME, configured to activate a task for tracing a UE in a network according to a tracing task message sent by an EMS and send the task to an eNodeB through an S1 link;
in which the eNodeB is configured to receive the task sent by the MME.

An embodiment of the present invention further provides an MME, where the MME includes:
an activation module, configured to activate a task for tracing a UE in a network according to a tracing task message sent by an EMS; and
a sending module, configured to send the task to an eNodeB through an S 1 link.

An embodiment of the present invention further provides an EMS, where the EMS includes:
a sending module, configured to send a tracing task message to an MME; and
an allocation module, configured to manually allocate a trace reference in the tracing task message according to a configuration strategy or automatically allocate a trace reference in the tracing task message according to a preset rule.

Compared with the prior art, the embodiments of the present invention have the following advantage: the activated task for tracing the UE in the network can be sent through the S1 link, so as to realize tracing the UE in the network.

### BRIEF DESCRIPTION OF THE DRAWINGS

To illustrate the technical solutions according to the embodiments of the present invention more clearly, accompanying drawings for describing the embodiments are introduced briefly in the following. Apparently, the accompanying drawings in the following description are only some embodiments of the present invention; persons of ordinary skill in the art can derive other drawings according to the accompanying drawings without paying any creative efforts.
FIG 1 is a schematic flow chart of a method for tracing a UE in a network according to a first embodiment of the present invention;
FIG 2 is a schematic flow chart of another method for tracing a UE in a network according to a second embodiment of the present invention;
FIG. 3 is a schematic structural view of a system for tracing a UE in a network according to a third embodiment of the present invention;
FIG. 4 is a schematic structural view of an apparatus for tracing a UE in a network according to a fourth embodiment of the present invention; and
FIG. 5 is a schematic structural view of another apparatus for tracing a UE in a network according to a fifth embodiment of the present invention.

### DETAILED DESCRIPTION OF THE EMBODIMENTS

The technical solutions of the present invention will be clearly and completely described in the following with reference to the accompanying drawings. It is obvious that the embodiments to be described are only a part rather than all of the embodiments of the present invention. Persons having ordinary skill in the art can derive other embodiments from the embodiments given herein without making any creative effort, and all such embodiments are covered in the protection scope of the present invention.

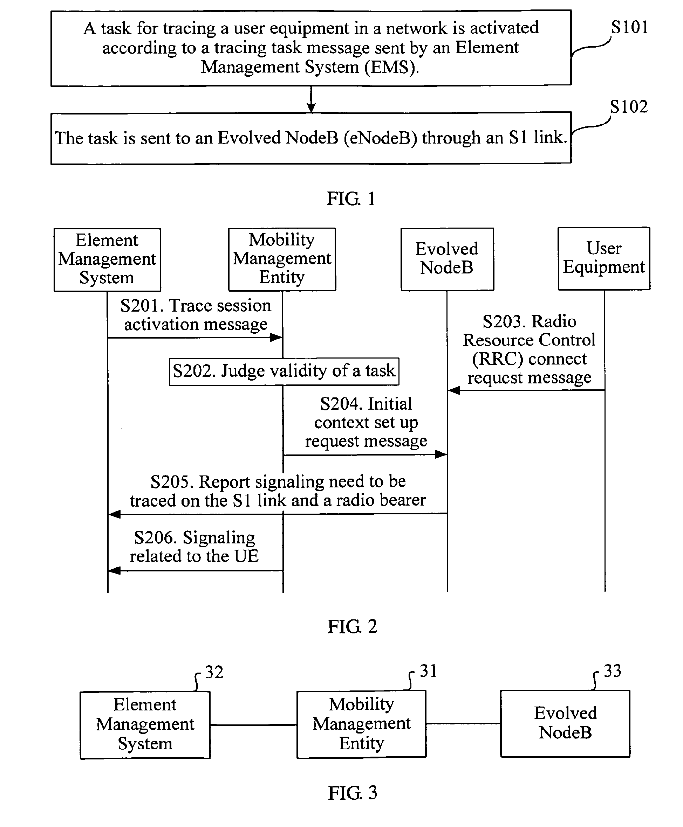

FIG. 1 is a schematic flow chart of method for tracing a UE in a network according to a first embodiment of the present invention. As shown in FIG. 1, the method includes the following steps.

Step S101, a task for tracing a UE in a network is activated according to a tracing task message sent by an EMS.

Step S 102, the task is sent to an eNodeB through an S1 link.

It can be seen that in the embodiment, the task is sent through the S1 link, so as to realize tracing the UE in the network.

FIG. 2 is a schematic flow chart of another method for tracing a UE in a network according to a second embodiment of the present invention. As shown in FIG 2, the method includes the following steps.

Step S201, the EMS sends a trace session activation message to an MME network element. The trace session activation message comprises IMSI information or IMEI information, and a trace reference. The trace reference can be manually allocated by the EMS according to a configuration strategy thereof or automatically allocated by the EMS according to a preset rule; and during one trace session, the trace reference remains unchanged.

The IMSI information or the IMEI information and the trace reference are carried in the trace session activation message. The embodiment is described by taking the trace session activation message as an example. However, the present invention is not limited to the trace session activation message, as long as the message carries the IMSI information or IMEI information, and the trace reference.

Step S202, after receiving the trace session activation message, the MME network element judges the validity of the task. For example, the task is not valid if the MME network element judges that task is for tracing one UE repeatedly. If the task is valid, the MME network element activates the task for tracing the UE in the network.

Step S203, when the UE is handed over from an idle state to a Radio Resource Control Connect (RRC CONNECT) state, the UE sends an RRC connect request message to an eNodeB, and the RRC connect request message carries a Temporary Mobile Subscriber Identity (S-TMSI) which is stored in the UE and most recently allocated by the MME.

Specifically, a special S1 link for the UE is created between the MME and the eNodeB. Identifiers of the S1 link are eNodeB UE S1 Application Protocol Identifier (eNodeB UE S1 AP ID) and MME UE S1 AP ID. Meanwhile, the eNodeB creates a radio bearer for the UE. The signaling on the radio bearer and the S1 link are related to the UE. In Step 203, the eNodeB may obtain a mapping relationship of any two of the S-TMSI, the radio bearer and the S1 link. However, the eNodeB only knows the S-TMSI of the UE and does not know that the specified UE identifier in the trace session is IMSI or IMEI. The eNodeB cannot judge whether it is necessary to report the signaling related to the UE on the radio bear link and the S1 link to the EMS. Therefore, before obtaining the mapping relationship between the S-TMSI and the IMSI or the mapping relationship between the S-TMSI and the IMEI, the eNodeB cannot judge whether it is necessary to report the signaling to the EMS. At this time, the eNodeB needs to buffer the signaling.

Step S204, during a connection process of the UE, the MME sends an initial context set up request message to the eNodeB through the S1 link and sends the task for tracing the UE to the eNodeB to which the UE is connected, so as to propagate the task for tracing the UE in the network.

Specifically, if the initial context set up request message includes a trace activation IE (information element), it is indicated that the signaling on the S1 link needs to be traced. In Step S203, the eNodeB knows the S1 link corresponding to the UE and the radio bear corresponding to the UE, so the signaling on the corresponding radio bear can also be traced. If the initial context set up request message does not include the trace activation IE, it is indicated that the signaling on the S1 link and the radio bear link do not need to be traced.

The step may further include the following step. If the initial context set up request message does not include the trace activation IE, the MME can activate the task of the eNodeB through a TRACE START signaling, in which the trace start signaling also includes the trace activation IE.

The step may further include the following step. After receiving the task for tracing the UE in the network, the eNodeB propagates the task to other eNodeBs, in which the eNodeB is a source eNodeB and the other eNodeBs are target eNodeBs. During the handover, when the source eNodeB propagates the task to the target eNodeB, the source eNodeB first judges whether there is an X2 link between the source eNodeB and the target eNodeB. If there is not an X2 link between the source eNodeB and the target eNodeB, the source eNodeB send the task to the target eNodeB through the S1 link. If there is an X2 link between the source eNodeB and the target eNodeB, the source eNodeB propagates the task to the target eNodeB through the X2 interface. If the source eNodeB propagates the task to the target eNodeB through the X2 interface, the source eNodeB instructs, through a HANDOVER REQUEST message corresponding to the X2 interface, the target eNodeB to create and start a task for tracing the UE and cancel the task on the source eNodeB after the handover succeeds. When the propagation is carried out through an S1 interface, the MME instructs, through the HANDOVER REQUEST message corresponding to the S1 interface, the target eNodeB to create and start a task for tracing the UE, delete the S1 link between the source eNodeB and the MME and cancel the task on the source eNodeB after the successful handover. The target eNodeB reports the signaling to the EMS managing the eNodeB. If the target eNodeB and the source eNodeB are not managed by the same EMS, signaling documents related to the UE in different EMSes can be manually copied to one EMS for network-wide signaling analysis of the UE.

All eNodeBs are required to buffer the signaling on all S1 links and radio bearers on the eNodeB. After receiving the initial context set up request message or a trace start message sent by the MME, the eNodeB judges whether the signaling on the S1 link need to be traced; if the signaling on the S1 link needs not to be traced, the eNodeB deletes the signaling buffered on the S1 link and the radio bearer, and otherwise, the eNodeB reports the buffered signaling to the EMS. After receiving a UE context release request message sent by other eNodeBs or a UE context release command message or a deactivate trace message sent by the MME, the eNodeB cancels the corresponding task for tracing the UE according to the MME UE S1 AP ID and the eNodeB UE S1 AP ID carried in the message and stops the reporting of the signaling on the corresponding S1 link and radio bearer.

The eNodeB may be connected to multiple MMEs at the same time. During one trace session, an MME handover may occur. At this time, the trace session can be propagated through the signaling between the MMEs, or the session can be traced by the multiple MMEs through using the same trace reference, so during presence of a trace session, no matter which MME the UE is connected to, the reported signaling can be uniquely identified through the trace reference. When the eNodeB is connected to multiple MMEs at the same time, the EMS can deliver a stop user trace session command to one of or all MMEs. The MME stops the reporting of the signaling of the UE according to the stop user trace session command, meanwhile the MME instructs the eNodeB to stop the reporting of the signaling on the S1 link and the corresponding radio bearer through a standard signaling, deactivate trace message, in the S1 interface, and then returns the execution results of the stop user network trace session command to the EMS.

The method further includes the following steps.

Step 205, the eNodeB reports the signaling that needs to be traced on the S1 link and the radio bearer to the EMS managing the eNodeB.

Step S206, the MME reports the signaling related to the UE to the EMS managing the MME, in which the signaling reported by the MME are associated with the signaling reported by the eNodeB through the trace reference.

Specifically, if the eNodeB and the MME are managed by the same EMS, signaling of the UE can be stored in a unified manner, or the signaling on the S1 link and the radio bearer reported by the eNodeB and the signaling related to the user reported by the MME can be stored separately according to the strategy configured by the EMS. If the eNodeB and the MME are not managed by the same EMS, the signaling documents reported by the eNodeB and the MME can be manually copied to one EMS for network signaling analysis. Whether the signaling belongs to the same trace session depends on the judgment of whether the trace references of the signaling documents are the same. If the trace references of the signaling documents are the same, the signaling belongs to the same trace session.

Furthermore, signaling exchange has a strict time sequence. However, the signaling of the UE is respectively reported by different network element equipment to the EMS. Clocks of different network element equipment cannot be completely synchronous and loads on different network elements are also different. Therefore, time of the signaling received by the EMS reported from different network elements cannot completely reflect the practical sequence of the signaling. It is necessary to define some rules to solve the problem. The rules of solving the problem include, but not limited to, defining a signaling sequence in the standard signaling exchange to reproduce a complete signaling process, defining the largest acceptable time error to reproduce the complete signaling process, or when the EMS analyzes the signaling, combining the signaling sequence in the standard signaling exchange and the largest acceptable time error to reproduce the complete signaling process with a particular processing algorithm.

In an environment of multiple manufacturers, even if the MME equipment and the eNodeB equipment do not belong to the same manufacturer, the tracing for a user in the network can also be accomplished through the implementation method in the embodiment. In the implementation method, the signaling reported by different manufacturers is converted into the same format for analysis of the signaling of the user in the network. The method for tracing a UE in a network is applicable to all scenarios in which tracing the UE in the network is performed according to user identifier in a flat network, and the scenarios include fields of 3GPP LTE and the Worldwide Interoperability for Microwave Access (WiMAX).

It can be seen that in the embodiment of the present invention, a signaling session on the MME is sent to the eNodeB through the standard signaling of the S1 interface to realize tracing the UE in the network, and through the trace activation IE included in the handover request message on the S 1 interface and the X2 interface, the function of holding trace session can be realized; furthermore, the function of stopping trace session on the eNodeB and the function of holding trace after the MME handover can also be realized. The tracing session on the MME can be manually stopped; and the problem that the time of the signaling is inaccurate can be solved by defining the signaling sequence and the largest acceptable time error in the standard signaling process.

FIG. 3 is a schematic structural view of a system for tracing a UE in a network according to a third embodiment of the present invention. As shown in FIG. 3, the system includes an MME 31 and an EMS 32.

The MME 31 is configured to activate a task for tracing a UE in a network according to a tracing task message sent by the EMS 32 and send the task to an eNodeB 33 through an S1 link.

The EMS 32 is configured to send the tracing task message to the MME 31, and manually allocate a trace reference in the tracing task message according to a configuration strategy or automatically allocate a trace reference in the tracing task message according to a preset rule.

The system further includes the eNodeB 33.

The eNodeB 33 is configured to receive the task for tracing the UE in the network sent by the MME 31 and then send the task to other eNodeBs.

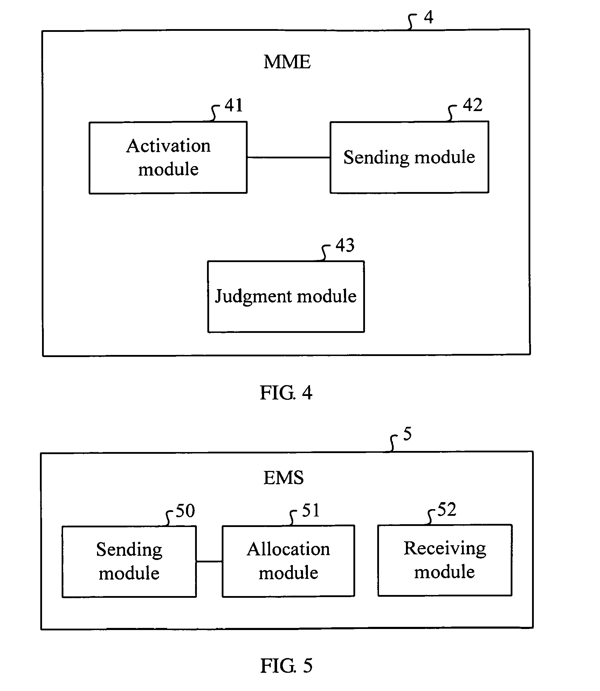

FIG 4 is a schematic structural view of an apparatus for tracing a UE in a network according to a fourth embodiment of the present invention. As shown in FIG. 4, the apparatus may be an MME4 and includes an activation module 41 and a sending module 42.

The activation module 41 is configured to activate a task for tracing a UE in a network according to a tracing task message sent by an EMS.

The sending module 42 is configured to send the task for tracing the UE in the network activated by the activation module 41 to an eNodeB through an S1 link.

The apparatus further includes a judgment module 43.

The judgment module 43 is configured to judge whether the task for tracing a UE in a network is needed according to an initial context set up request message, and if the task is needed, report signaling buffered by the eNodeB on an radio bearer and the S1 link to the EMS; or if the tracing is not needed, delete the signaling buffered by the eNodeB on the radio bearer link and the S1 link.

FIG 5 is a schematic structural view of a apparatus for tracing a UE in a network according to a fifth embodiment of the present invention. As shown in FIG. 5, the apparatus includes a sending module 50 and an allocation module 51.

The sending module 50 is configured to send a tracing task message to the MME.

The allocation module 51 is configured to manually allocate a trace reference in the tracing task message sent by the sending module 50 according to a configuration strategy or automatically allocate a trace reference in the tracing task message sent by the sending module 50 according to a preset rule.

The apparatus further includes a receiving module 52.

The receiving module 52 is configured to receive the reported signaling buffered by the eNodeB on the radio bearer link and the S1 link.

Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in one or more nonvolatile storage media (for example, CD-ROM, USB flash drive, or removable hard disk) and contain several instructions configured to instruct computer equipment (for example, a personal computer, a server, or network equipment) to perform the method according to the embodiments of the present invention.

The above description is merely preferred embodiments of the present invention. It should be noted by persons of ordinary skill in the art that modifications and improvements may be made without departing from the principle of the present invention, which should be construed as falling within the scope of the present invention.

## Claims

1. A method for tracing a user equipment in a network, comprising:
activating a task for tracing a user equipment in a network according to a tracing task message sent by an Element Management System (EMS); and
sending the task to an evolved base station through an S1 link.

2. The method according to claim 1, wherein the tracing task message comprises: a trace reference, and International Mobile Station Equipment Identity (IMSI) information or International Mobile Station Identification Code (IMEI) information.

3. The method according to claim 2, wherein the trace reference is manually allocated by the EMS according to a configuration strategy or automatically allocated according to a preset rule.

4. The method according to claim 1, before the sending the task to an evolved base station through an S1 link, further comprising:
receiving, by the evolved base station, a Radio Resource Control (RRC) connect request message sent by a user equipment, wherein the RRC connect request message comprises a Temporary Mobile Subscriber Identity (S-TMSI) which is stored in the user equipment and most recently allocated by a Mobility Management Entity (MME); and
obtaining a mapping relationship of the S-TMSI, a radio bearer and the S1 link of the UE according to the S-TMSI.

5. The method according to claim 4, further comprising:
buffering, by the evolved base station, signaling on the radio bearer and the S1 link.

6. The method according to claim 1, after the sending the task to an evolved base station through an S1 link, further comprising:
sending, by the evolved base station, the task to other evolved base stations.

7. The method according to claim 6, wherein the sending, by the evolved base station, the task to other evolved base stations comprises:
if a user equipment is handed over, sending the task through the S1 link between the evolved base station and a target evolved base station and canceling the S1 link and the task on the evolved base station after the handover.

8. The method according to claim 7, before the sending the tracing task through the S1 link, further comprising:
judging whether there is an X2 link between the evolved base station and the target evolved base station, if there is an X2 link between the evolved base station and the target evolved base station, sending the task through the X2 link and canceling the task on the evolved base station after the handover; if there is not an X2 link between the evolved base station and the target evolved base station, sending the task through the S1 link.

9. The method according to claim 1, wherein the sending the task to an evolved base station through an S1 link specifically comprises:
if a received message is an initial context set up request message or a trace start message, judging whether the signaling on the S1 link needs to be traced, and if the signaling on the S1 link needs to be traced, reporting signaling buffered by the evolved base station on an radio bearer and the S1 link to the EMS; or if the S1 link does not need to be traced, deleting the signaling buffered by the evolved base station on the radio bearer and the S1 link; or
if a received message is a user equipment context release command message or a deactivate trace message, canceling the corresponding task for tracing the user equipment and stopping reporting of the signaling on the S1 link and the radio bearer; or
if a received message is a user equipment context release request message, canceling the corresponding task for tracing the user equipment and stopping the reporting of the signaling on the S1 link and the radio bearer.

10. The method according to claim 9, wherein if the S1 link does not need to be traced, the deleting the signaling buffered by the evolved base station on the radio bearer and the S1 link comprises:
stopping reporting the signaling on the S1 link and stopping buffering the signaling on the radio bearer.

11. The method according to claim 9, wherein if the signaling received by the EMS is reported by different evolved base stations and the signaling are not completely synchronous,
the EMS reproduces a complete signaling process by defining a signaling sequence in a standard signaling exchange; or
reproduces the complete signaling process by defining a largest acceptable time error; or when the EMS analyzes the signaling, reproduces the complete signaling process through a particular processing algorithm by combining the signaling sequence and the largest acceptable time error in the standard signaling exchange.

12. The method according to claim 1, wherein the network comprises fields of the 3rd Generation Partnership Project (3GPP) Long Term Evolution (LTE) network and/or the Worldwide Interoperability for Microwave Access (WiMAX) network.

13. A system for tracing a user equipment in a network, comprising:
a Mobility Management Entity (MME), configured to activate a task for tracing a user equipment in a network according to a tracing task message sent by an Element Management System (EMS) and send the task to an evolved base station through an S1 link,
wherein the evolved base station is configured to receive the task sent by the MME.

14. The system according to claim 13, further comprising:
the EMS, configured to send the tracing task message to the MME and manually allocate a trace reference in the tracing task message according to a configuration strategy or automatically allocate a trace reference in the tracing task message according to a preset rule.

15. The system according to claim 13, wherein the evolved base station is further configured to send the tracing task to other evolved base stations.

16. A Mobility Management Entity (MME), comprising:
an activation module, configured to activate a task for tracing a user equipment in a network according to a tracing task message sent by an Element Management System (EMS); and
a sending module, configured to send the task to an evolved base station through an S 1 link.

17. The MME according to claim 16, further comprising:
a judgment module, configured to judge whether the task for tracing the user equipment in thehe network is needed according to an initial context set up request message, and if the task is needed, report signaling buffered by the evolved base station on a radio bearer and the S1 link to the EMS; or
if the task is not needed, delete the signaling buffered by the evolved base station on the radio bearer and the S1 link.

18. An Element Management System (EMS), comprising:
a sending module, configured to send a tracing task message to a Mobility Management Entity (MME); and
an allocation module, configured to manually allocate a trace reference in the tracing task message according to a configuration strategy or automatically allocate a trace reference in the tracing task message according to a preset rule.

19. The EMS according to claim 18, further comprising:
a receiving module, configured to receive reported signaling buffered by an evolved base station on a radio bearer and an S 1 link.
